# EUROPÄISCHE PATENTSCHRIFT

(11) **EP 0 467 110 B1**
(45) Veröffentlichungstag und Bekanntmachung des Hinweises auf die Patenterteilung: **23.11.1994**
(21) Anmeldenummer: 91110433.9
(22) Anmeldetag: 25.06.1991
(51) Int. Cl.: C01B 5/00, G21C 19/30, B01J 23/89

(54) **Katalysator zur Beseitigung von Wasserstoff aus einer Wasserstoff, Sauerstoff und Dampf enthaltenden Atmosphäre**
Catalyst for removing hydrogen from a hydrogen, oxygen and vapour containing atmosphere
Catalyseur pour l'élimination de l'hydrogène d'une atmosphère contenant de l'hydrogène, de l'oxygène et de la vapeur

(30) Priorität: 12.07.1990 DE 4022236; 22.12.1990 DE 4041661
(43) Veröffentlichungstag der Anmeldung: 22.01.1992
(73) Patentinhaber: FORSCHUNGSZENTRUM JÜLICH GMBH, 52425 Jülich (DE); Gesellschaft für Reaktorsicherheit (GRS) mbH, 50667 Köln (DE)
(72) Erfinder: Chakraborty, Amiya Kumar, Dr., W-5042 Erftstadt (DE); Rohde, Jürgen, W-5060 Bergisch-Gladbach 2 (DE); Klatt, Karl-Heinz, W-5170 Jülich (DE); Wenzl, Helmut, Prof. Dr., W-5170 Jülich (DE); Konrad, Ralf, W-6349 Sinn (DE)

(56) Entgegenhaltungen:
- EP-A- 0 033 203
- EP-A- 0 233 564
- EP-A- 0 301 536
- EP-A- 0 358 912
- EP-A- 0 388 955
- US-A- 3 873 472

## Beschreibung

Die Erfindung bezieht sich auf einen Katalysator zur Beseitigung von Wasserstoff aus einer Wasserstoff, Sauerstoff und Dampf enthaltenden Atmosphäre, wie im Oberbegriff des Anspruchs 1 angegeben ist.

Wasserstoff aus einem Wasserstoff und Sauerstoff enthaltenden und deshalb explosiven Gasgemisch zu beseitigen, ist insbesondere bei Kernkraftwerksunfällen von Bedeutung. Solche Gasgemische können vor allem bei Kernschmelzunfällen von Leichtwasserreaktoren sowie auch bei Schwerwasser moderierten Reaktoren auftreten. Zusätzlich setzen während der Auflagerung bzw. Endlagerung der abgebrannten Brennstäbe Wasserstoff und seine Isotopen in der sauerstoffhaltigen eingeschlossenen Atmosphäre frei und tragen dabei gewisses Gefährdungspotential mit sich.

In DE-A 37 25 290 werden Katalysatorschichten aus Pd-Ni-Cu-Legierungen beschrieben. Es bat sich gezeigt, daß solche auf Trägermaterialien aufgebrachte Katalysatoren aus Pd, Ni Cu sowie Pd-Ag oder Pd-Cu ein großes Potential für eine Anwendung zur Beseitigung des Wasserstoffs bei Unfallsituationen mit Kernschmelzen aufweisen. Diese Legierungen besitzen gute katalytische Aktivität auch bei Vorhandensein von Katalysatorgiften wie z.B. CO, J und S. Die Legierungen weisen sehr geringe Verzögerungszeiten bis zur katalytischen Reaktion auf.

Nach theoretischen Darstellungen über den Ablauf eines Kernschmelzunfalles ist zu erwarten, daß die Freisetzung des Wasserstoffs mit der Freisetzung von geringen Mengen von CO₂ und CO einhergehen wird. Auch wird eine erhebliche Menge von Dampf während des Unfalls freigesetzt. Der Dampf liegt teilweise in unterkühltem und zeitweise in überhitztem Zustand vor. Die zeitabhängige Freisetzung des Dampfes hängt hauptsächlich von der Unfallsequenz ab. Jedoch auch bei gleicher Unfallsequenz wird der Dampfgehalt für die unterschiedliche Raumaufteilung des Sicherheitsbehälters unterschiedlich anfallen. Es läßt sich zeigen, daß die Freisetzung des Dampfes praktisch von Beginn des Kernschmelzunfalls an berücksichtigt werden muß. Je nach Raumaufteilung wird der Dampfgehalt zeitlich aufgrund von Kondensation und unterschiedlicher Dampffreisetzung verschiedene Peaks durchlaufen. Der Dampfgehalt kann in einem Raum des Sicherheitsbehälters kurzfristig Werte von weniger als 20 % bis zu 95 % erreichen.

Während mit der Freisetzung des Dampfes von Unfallbeginn an gerechnet wird, setzt die erste Freisetzung des Wasserstoffs mit gewisser Verzögerung nach etwa einer Stunde ein. Die höchsten Wasserstoffkonzentrationen sind insbesondere nach Versagen des Reaktordruckbehälters in den ersten Stunden der Freisetzung in den mittleren und unteren Anlagenräumen zu erwarten. Langfristig können sich in der Atmosphäre des Sicherheitsbehälters höhere Anreicherungen zündfähiger Gasgemische ausbilden und bei einer Verbrennung des Wasserstoffs den Sicherheitsbehälter gefährden.

Eine Analyse der verschiedenen Unfallsequenzen führt zu dem Schluß, daß bei solcher Unfallsituation mit langfristiger Freisetzung von Dampf gerechnet werden muß. Dies bedeutet, daß die Katalysatoren zur Beseitigung von Wasserstoff auch langfristig einer Dampfströmung ausgesetzt sein werden. Dabei ist zu berücksichtigen, daß Leichtwasserreaktoren mit einem deionisierten Wasser betrieben werden, das besonders für seine Angriffsfähigkeit bekannt ist.

Aufgabe der Erfindung ist es, Katalysatoren zur Beseitigung von Wasserstoff aus Wasserstoff und Sauerstoff enthaltenden Atmosphären zu schaffen, die auch bei zusätzlicher Anwesenheit von Wasserdampf in der Atmosphäre ihre katalytische Aktivität nicht einbüßen.

Diese Aufgabe wird gemäß der Erfindung durch die in Patentanspruch 1 angegebenen Merkmale gelöst. Danach wird die Katalysatorschicht auf einem Träger aufgebracht, der als Blech, Gewebe, Netz oder Granulat ausgebildet ist und aus einem Trägermaterial besteht, das hinsichtlich seiner Dehnung bei einer Temperaturänderung mit der Katalysatorschicht kompatibel und gegenüber Wasserdampf korrosionsbeständig ist. Die Korrosionsbeständigkeit des Trägermaterials verhindert dessen Oxidation in Anwesenheit von Wasserdampf. Es werdem also auch beim Aufreißen der Katalysatorschicht keine die Katalysation störende Oxidationsprodukte gebildet. Die katalytische Aktivität des Katalysators bleibt auch in Wasserdampf enthaltender Atmosphäre erhalten. Wesentlich ist auch, daß wegen der Temperaturkompatibilität von Trägermaterial und Katalysatorschicht beide aneinander besser haften bleiben. Ein Abblättern wird verhindert.

Als Trägermaterial sind insbesondere niedrig legierte ferritische Stähle mit anteilmäßig geringem Nickel- und Chromgehalt mit DIN-Bezeichnung legierte Edelstähle, wie 1.5732, 1.5755 und sonstige Edelstähle aus dieser Serie, sowie austenitische Stähle geeignet, die sich durch geringere Korrosionsbeständigkeit gegenüber den kohlenstoffhaltigen Stählen auszeichnen.

Zur Erhöhung der thermischen Kompatibilität zwischen Katalysatorschicht und Trägermaterial ist es erforderlich, Katalysatorschicht und Trägermaterial bezüglich ihrer thermischen linearen Ausdehnungskoeffizienten einander anzupassen. So kommen für eine Pd-Ni-Cu-Beschichtung Trägermaterialien mit Ausdehnungskoeffizienten um 11,7 x 10⁻⁶ cm/°C in Frage. Zur Auswahl stehen ferritische Stähle, bevorzugt die vorgenannten niedrig legierten, hoch warmfesten Stähle im ferritischen Zustand mit Cr und Ni.

Da das Platin einen linearen Ausdehnungskoeffizienten um 8,9 x 10⁻⁶ cm/°C besitzt, werden für eine Pt-Beschichtung Trägermaterialien aus reinem Ti, Ti-8,5 % Mn, Ti-5 % Al sowie die nickelreichen Legierungen mit Cu (Monel Metal) mit Ausdehnungskoeffizienten um 8,7 x 10⁻⁶ cm/°C bevorzugt.

Von Bedeutung für die thermische Kompatibilität ist auch die Wärmeleitfähigkeit von Trägermaterial und Katalysatorschicht und die Ausbildung intermetallischer Phasen. Keine intermetallischen Phasen werden beispielsweise im Zweistoffsystem von Eisen und Palladium ausgebildet, Pd als Katalysator und Eisen als Trägermaterial führen zu Phasen mit geringer Versprödung.

Damit das Trägermaterial während des Betriebes selbst keine Strukturumwandlung zeigt und als Folge davon Verspannungen zwischen Trägermaterial und Katalysatorbeschichtung auftreten, die ein Abplatzen der Katalysatorschicht verursachen, wird ein Trägermaterial bevorzugt, das im Temperaturbereich während der Temperaturerhöhung und bei Betriebstemperatur keine Mischkristalle sowie Phasen mit Wasserstoff und Sauerstoff bildet, die zu störenden Änderungen der Gitterparameter führen. Es bleiben auf diese Weise Trägermaterial und Katalysatorschicht im gesamten Bereich der Temperaturerhöhung auch bei Bildung von Mischkristallen und Phasen stets kompatibel.

Bei Freisetzung von Aerosolen aus Spaltprodukten und Strukturmaterialien werden bei Anwesenheit von Wasserdampf sowohl säure-als auch laugehaltige Lösungen gebildet, die den Katalysator insbesondere bei erhöhter Temperatur angreifen. Gemäß der Erfindung werden deshalb Trägermaterialien verwendet, die eine Beständigkeit des Katalysators bei Anwesenheit solcher Lösungen, Borsäure oder CO gewährleisten.

Wesentlich für die Auswahl der Trägermaterialien sind auch die Wasserstofflöslichkeit des Trägermaterials, das Ausbilden von Oxidationsschichten und die Oberflächenrauhigkeit des Trägermaterials. Zweckmäßig weist das Trägermaterial eine geringe Löslichkeit für Wasserstoff auf, so daß bei Abkühlung des Trägermaterials nur wenig Wasserstoff freigesetzt wird. Oxidschichten zwischen Trägermaterial und Katalysatorschicht behindern eine tragfähige Verbindung zwischen Träger und Beschichtung und begünstigen ein Abplatzen der Katalysatorschicht. Oxidschichten auf dem Trägermaterial sind daher vor Aufbringen der Katalysatorschicht zu entfernen. Die Katalysatorschicht ist daher bevorzugt auf sandgestrahltem Trägermaterial aufgebracht. Diese Oberflächenbehandlung vergrößert auch die Katalysatorfläche, denn während der Beschichtung setzen sich die aufgedampften oder durch Bestäuben aufgebrachten Katalysatorschichten auch auf den Niederungen der sandgestrahlten Oberfläche des Trägermaterials ab und verankern sich unter Beibehaltung der rauhen Oberfläche innerhalb der mikroskopischen Höhen- und Tiefenlagen.

Insgesamt wird somit mit der Erfindung erreicht, daß sich der Katalysator durch Wärmeentwicklung während der Katalyse nicht vom Trägermaterial ablöst. Ein Abplatzen von Teilchen oder Schichtbereichen der Katalysatorschicht wird vermieden. Damit ist auch verhindert, daß solche Teilchen oder abgeplatzte Schichtbereiche bei weiterer Katalyse wegen fehlender Wärmeableitung zum Glühen kommen und die wasserstoffhaltige Atmosphäre zünden können.

Die Erfindung und weitere Einzelheiten der Erfindung werden nachfolgend anhand von Ausführungsbeispielen näher erläutert. Es zeigen im einzelnen:
- Figur 1: Druckverlauf in einer Reaktionskammer bei katalytischer Oxidation von Wasserstoff an einer PdNiCu-Legierung mit 95 Gew% Pd, 4 Gew% Ni, 1 Gew% Cu, die als Schicht beidseitig auf einem Trägerblech aus ferritischem Stahl 1.5755 aufgebracht ist, sowie der dabei auftretende Temperaturverlauf im Trägerblech nach Aussetzen in eine freien Wasserstoff und Sauerstoff enthaltende Sattdampfatmosphäre bei 100°C;
- Figur 2: Druck- und Temperaturverlauf wie in Figur 1 bei katalytischer Oxidation an der gleichen PdNiCu-Legierung, jedoch aufgebracht auf einem Trägerblech aus Stahl 1.5732;

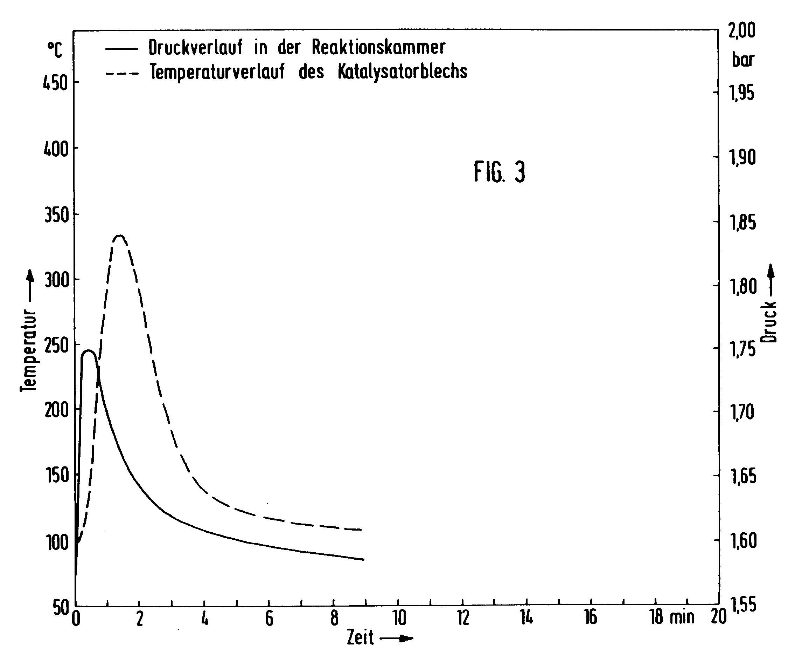

- Figur 3: Druck- und Temperaturverlauf wie in Figur 2 bei katalytischer Oxidation eines in Figur 2 angegebenen Katalysators auf gleichem Trägermaterial in einer Atmosphäre mit 57,6 Vol% Wasserdampf, 32,9 Vol% Luft und 9,5 Vol% H₂;
- Figur 4: Druck- und Temperaturverlauf wie in Figur 2 bei katalytischer Oxidation an einem Katalysator mit gleichem Trägermaterial in einer Atmosphäre mit 79,2 Vol% Wasserdampf, 15,9 Vol% Luft und 4,9 Vol% H₂;

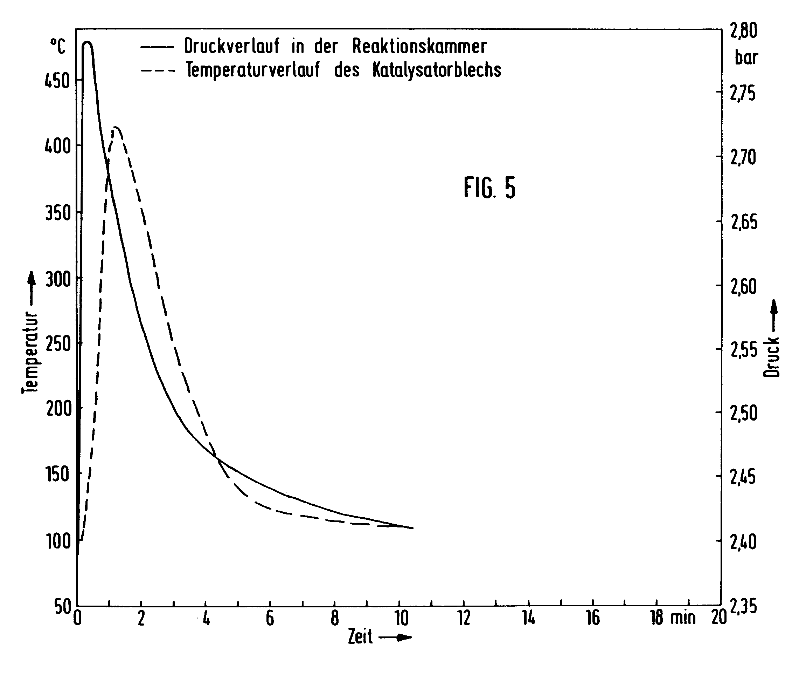

- Figur 5: Druck- und Temperaturverlauf bei katalytischer Oxidation eines in Figur 2 angegebenen Katalysators auf gleichem Trägermaterial in einer Atmosphäre mit 42,5 Vol% Wasserdampf, 43,5 Vol% Luft und 14 Vol% H₂.

### Ausführungsbeispiel 1

Es wird die katalytische Wirkung einer PdNiCu-Legierung, die 95 Gew% Pd, 4 Gew% Ni, 1 Gew% Cu enthält und die auf einem Trägerblech aus ferritischem Stahl 1.5755 beidseitig aufgetragen ist (der lineare Ausdehnungskoeffizient des Stahls von 11,7 x 10⁻⁶ cm/°C entspricht dem Ausdehnungskoeffizienten der PdNiCu-Legierung von 11,76 x 10⁻⁶ cm/°C), in einer Reaktionskammer mit einem Volumen von 6,5 l untersucht. In der Reaktionskammer lassen sich realistische Verhältnisse für Kernschmelzunfälle mit angepaßten Gasgemischen einstellen. In der Reaktionskammer befindet sich ein Katalysatorblech von 48 cm² Oberfläche.

Vor Beginn der katalytischen Reaktion wird das Katalysatorblech einer Sattdampfatmosphäre bei 100°C und 1 bar ausgesetzt. Die Einwirkungszeit betrug 3,25 h. Dies dient der Feststellung, ob der Sattdampf das Trägermaterial bei Bildung von Oberflächenrissen in der Katalysatorschicht angreift und den sofortigen Beginn der katalytischen Reaktion stört. Anschließend wurde in die Reaktionskammer 1,29 bar Luft und 0,11 bar H₂ eingeleitet. Die Atmosphäre weist nun 44 Vol% Dampf und 51,6 Vol% Luft und 4,4 Vol% H₂ auf. Infolge einsetzender katalytischer Oxidation des Wasserstoffs fiel nach dieser Einleitung der Druck in der Reaktionskammer innerhalb von 2 Min von 2,51 bar auf 2,45 bar. Der Druck nahm dann langsam und konstant ab. Hieraus ist ersichtlich, daß die Oxidationsreaktion rasch begann und nach 2 Min bereits abgeschlossen war, der Wasserstoff also gebunden vorlag.

Im gleichen Zeitraum nahm die Temperatur im Katalysatorblech ausgehend von 100°C innerhalb von 1 Min bis zu einer maximalen Temperatur von 220°C zu. Die Temperatur klang rasch wieder ab. Nach 7 Min erreichte das Blech wieder die Ausgangstemperatur von 100°C.

Nach Ablauf der katalytischen Reaktion wies der Katalysator eine glänzende Oberfläche auf. Eine Rißbildung an der Katalysatorschicht konnte nicht festgestellt werden.

### Ausführungsbeispiel 2

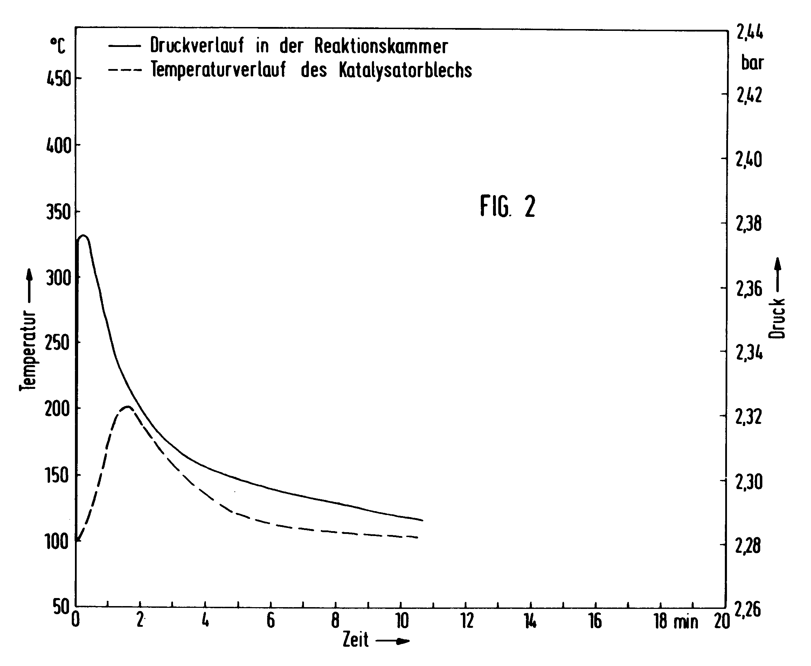

In Figur 2 ist der Reaktionsverlauf einer katalytischen Oxidation von Wasserstoff für eine PdNiCu-Legierung wiedergegeben, die die gleiche Zusammensetzung wie im Ausführungsbeispiel 1 aufweist. Die PdNiCu-Legierung ist beidseitig auf einem Trägerblech aus ferritischem Stahl 1.5732 aufgedampft. Der lineare Ausdehnungskoeffizient des Stahls von 11,7 x 10⁻⁶ cm/°C stimmt mit dem der PdNiCu-Legierung gut überein. Das Trägerblech ist 0,5 mm dick. Insgesamt stehen für die Katalyse 48 cm² Katalysatoroberfläche zur Verfügung.

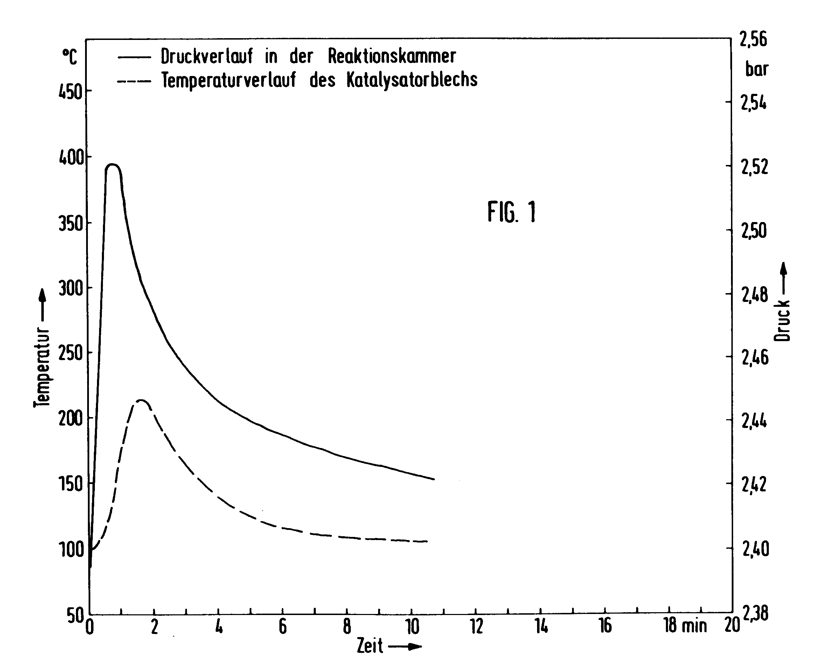

In Figur 2 ist der Druckverlauf in der Reaktionskammer sowie der Temperaturverlauf des Katalysatorblechs in gleicher Weise wie in Figur 1 dargestellt. Abweichend von dem ersten Ausführungsbeispiel wurde das Katalysatorblech mit dem Trägermaterial aus Stahl vor katalytischer Reaktion einer Sattdampfatmosphäre bei 100°C 72 h lang ausgesetzt.

Bei diesem Ausführungsbeispiel enthält die Reaktionskammer eine Gasatmosphäre mit folgenden Anteilen: Wasserdampf 42,2 Vol%, Luft 53,6 Vol%. In dieses Gasgemisch wurde Wasserstoff mit 4,2 Vol% eingeleitet.

Wie im Ausführungsbeispiel nach Figur 1 setzt auch hier die katalytische Reaktion unmittelbar nach Einleiten des Wasserstoffs in die Gasatmosphäre ein.

Mit steigendem Druck in der Reaktionskammer bei Zugabe des Wasserstoffs nimmt auch die Temperatur im Katalysatorblech zu. Die katalytische Oxidation des Wasserstoffs führt zu einem Druckabfall. Der Druck in der Kammer fällt von etwa 2,37 bar auf 2,3 bar in wenigen Minuten ab. Die Temperatur im Katalysatorblech nimmt ausgehend von 100°C innerhalb von 2 Min bis auf maximal etwa 205°C zu. Sie fällt anschließend innerhalb von 4 Min wieder bis zum Ausgangswert von 100°C ab. Der Wasserstoff ist vollständig in Wasserdampf überführt.

Sowohl visuelle als auch lichtmikroskopische Untersuchungen nach Durchführung des Versuchs zeigten eindeutig, daß die Katalysatoroberfläche metallisch und frei von Rißbildungen und Ablagerungen war.

### Ausführungsbeispiel 3

Mit diesem Ausführungsbeispiel wird die Fähigkeit einer katalytischen Oxidation für eine Atmosphäre mit hohem Wasserstoffanteil demonstriert. Es wurde wie im Ausführungsbeispiel 2 ein Blech mit beidseitiger Beschichtung der gleichen PdNiCu-Legierung auf dem Trägerblech aus ferritischem Stahl 1.5732 verwendet. Die Größe der Katalysatoroberfläche betrug wiederum 48 cm². In diesem Fall enthielt die Gasatmosphäre die folgenden Gasanteile: 57,6 Vol% Wasserdampf, 32,9 Vol% Luft und 9,5 Vol% Wasserstoff.

Wie in den vorhergehenden Ausführungsbeispielen setzt auch hier die katalytische Reaktion unmittelbar nach Einleiten des Wasserstoffs in die Gasatmosphäre ein. Nach Zuführung von 0,165 bar Wasserstoff führt die katalytische Oxidatioon von Wasserstoff zu einem Druckabfall, der Druck in der Reaktionskammer nahm von 1,85 bar auf 1,60 bar in wenigen Minuten ab. Die Temperatur im Katalysatorblech stieg ausgehend von 100°C innerhalb von 1 Min bis auf maximal 250°C. Innerhalb von wenigen Minuten ging der Wasserstoff in Wasserdampf über.

### Ausführungsbeispiel 4

Dieses Ausführungsbeispiel zeigt den Reaktionsverlauf bei katalytischer Oxidation mit gleicher PdNiCu-Legierung in einer wasserdampfreichen Gasatmosphäre. Für das Katalysatorblech wurden die gleichen Abmessungen entsprechend den vorhergehenden Ausführungsbeispielen gewählt. Als Trägermaterial dient ferritischer Stahl 1.5732.

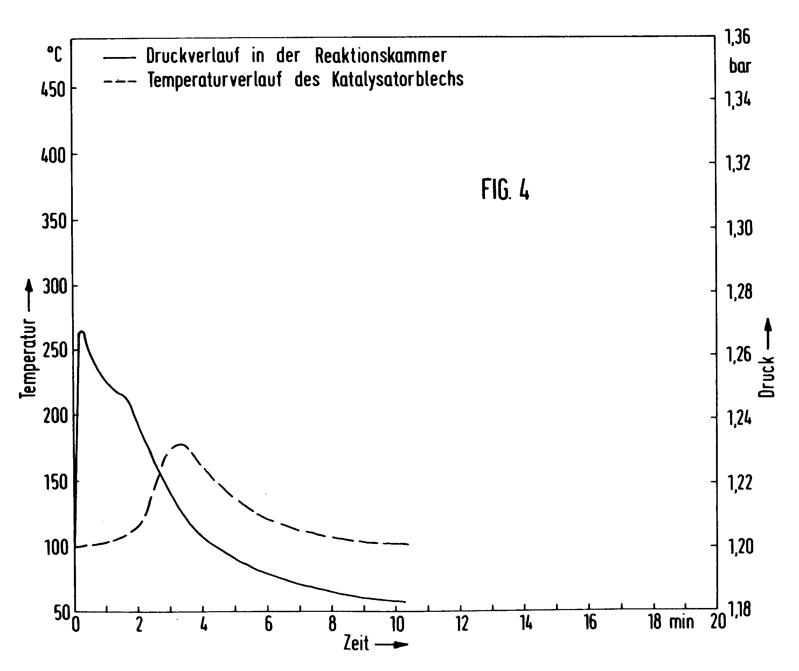

Beim Ausführungsbeispiel nach Figur 4 enthält die Reaktionskammer eine Gaszusammensetzung mit folgenden Gasanteilen: 79,2 Vol% Wasserdampf, 15,9 Vol% Luft und 4,9 Vol% H₂. Vor der Durchführung des Versuchs wurde das Katalysatorblech 3,75 h in einer Sattdampfatmosphäre bei 100°C ausgesetzt. Unmittelbar nach Einleiten des Wasserstoffs in die dampf- und lufthaltige Atmosphäre setzte die katalytische Oxidation ein. Mit steigendem Druck in der Reaktionskammer, bei Zugabe des Wasserstoffs, nahm auch die Temperatur des Katalysatorblechs zu. Die katalytische Oxidation des Wasserstoffs führte zu einem Druckabfall, der Druck in der Reaktionskammer fiel von etwa 1,27 bar innerhalb von etwa 4 Min auf 1,2 bar ab. Die Temperatur im Katalysatorblech nahm ausgehend von 100°C rasch zu und stieg innerhalb von 2 Min bis auf maximal 180°C an. Sie fiel anschließend wieder und erreichte schon nach 6 Min wieder ihren Anfangswert von 100°C. Der Wasserstoff wurde vollständig durch die katalytische Oxidation in Wasserdampf überführt.

### Ausführungsbeispiel 5

Es wird der Reaktionsverlauf an der gleichen PdNiCu-Legierung auf Trägermaterial aus Stahl 1.5732 bei wasserstoffreicher Gasatmosphäre untersucht. Die Blechabmessungen entsprechen den Ausführungsbeispielen 2, 3 und 4. In der Reaktionskammer wird eine Atmosphäre mit folgenden Gasanteilen eingestellt: 42,5 Vol% Waserdampf, 43,5 Vol% Luft und 14 Vol% H₂. Vor Beginn der katalytischen Reaktion wurde das Katalysatorblech 2,5 h lang einer Sattdampfatmosphäre bei 100°C ausgesetzt.

Infolge einsetzender katalytischen Oxidation des Wasserstoffs fiel nach dessen Einleitung der Druck in der Reaktionskammer innerhalb von 3 Min von 2,77 bar auf 2,40 bar ab. Die Temperatur stieg aufgrund der hohen H₂-Konzentration innerhalb von 1 Min von 100°C bis auf eine maximale Temperatur von 415°C an. Nach 3 Min erreichte das Blech wieder ungefähr die Ausgangstemperatur, die Temperatur des Bleches betrug 115°C.

Nach Ablauf der katalytischen Reaktion wies das Katalysatorblech eine glänzende Oberfläche auf. Eine Rißbildung an der Katalysatorschicht konnte durch die mikroskopische Beobachtung nicht festgestellt werden.

## Patentansprüche

1. Katalysator zur Oxidation von Wasserstoff in Wasserstoff, Wasserdampf und Sauerstoff enthaltender Atmosphäre, bestehend aus einem die Oxidation des Wasserstoffs beeinflussenden Metall oder einer entsprechenden Metallegierung, die als Katalysatorschicht auf einem Trägermaterial aufgebracht sind, das in Form eines Bleches, Gewebes, Netzes oder als Granulat vorliegt und gegenüber Wasserdampf korrosionsbeständig ist,
**dadurch gekennzeichnet,**
daß zur thermisch kompatiblen Verbindung zwischen Trägermaterial und Katalysatorschicht deren lineare Ausdehnungskoeffizienten etwa gleich groß sind und mit Erhöhung der Temperatur in gleicher Weise zunehmen.

2. Katalysator nach Anspruch 1,
**dadurch gekennzeichnet,**
daß die Wärmeleitfähigkeiten von Trägermaterial und Katalysatorschicht thermisch kompatibel sind.

3. Katalysator nach Anspruch 1 oder 2,
**dadurch gekennzeichnet,**
daß das Trägermaterial während Temperaturerhöhungen bei Betrieb nur solche Mischkristalle oder Phasen mit Wasserstoff und Sauerstoff bildet, die thermisch kompatibel sind.

4. Katalysator nach einem der vorgehenden Ansprüche,
**dadurch gekennzeichnet,**
daß zwischen Trägermaterial und Katalysatorschicht keine intermetallische Phasen und keine Oxidschicht ausgebildet ist.

5. Katalysator nach einem der vorhergehenden Ansprüche,
**dadurch gekennzeichnet,**
daß das Trägermaterial gegenüber chemischem Angriff durch säure- bzw. laugehaltige Verbindungen, Borsäure oder CO beständig ist.

## Claims

1. A catalyst for the oxidation of hydrogen in an atmosphere containing hydrogen, water vapour and oxygen, consisting of a metal or a corresponding metal alloy which influences the oxidation of hydrogen and which is deposited as a catalyst layer on a support material which is present in the form of a metal sheet, a fabric, a network or as a granular material and is corrosion-resistant in relation to hydrogen, characterised in that for a thermally compatible bond between the support material and the catalyst layer their linear coefficients of thermal expansion are approximately the same and increase in the same manner with increasing temperature.

2. A catalyst according to claim 1, characterised in that the thermal conductivities of the support material and the catalyst layer are thermally compatible.

3. A catalyst according to claim 1 or 2, characterised in that during temperature increases in operation the support material only forms mixed crystals or phases with hydrogen and oxygen which are thermally compatible.

4. A catalyst according to any one of the preceding claims, characterised in that no intermetallic phases and no oxide layer are formed between the support material and the catalyst layer.

5. A catalyst according to any one of the preceding claims, characterised in that the support material is resistant to chemical attack by compounds containing acids or alkalies, boric acid or CO.

## Revendications

1. Catalyseur d'oxydation de l'hydrogène d'une atmosphère contenant de l'hydrogène, de la vapeur d'eau et de l'oxygène, constitué d'un métal ayant de l'influence sur l'oxydation de l'hydrogène ou d'un alliage métallique correspondant, qui sont déposés sous forme de couche de catalyseur sur une matière support qui se présente sous la forme d'une tôle, d'un tissu, d'un filet ou sous la forme de granulés et qui résiste à la corrosion par la vapeur d'eau,
caractérisé ce que, pour obtenir une liaison compatible thermiquement entre la matière support et la couche de catalyseur, leurs coefficients de dilatation linéaire sont sensiblement égaux et croissent de la même façon lorsque la température s'élève.

2. Catalyseur suivant la revendication 1,
caractérisé en ce que la conductivité thermique de la matière support et de la couche de catalyseur sont compatibles thermiquement.

3. Catalyseur suivant la revendication 1 ou 2,
caractérisé en ce que la matière support forme, pendant les élévations de température en fonctionnement, seulement des cristaux mixtes ou des phases avec l'hydrogène et l'oxygène, qui sont compatibles thermiquement.

4. Catalyseur suivant l'une des revendications précédentes,
caractérisé en ce qu'entre la matière support et la couche de catalyseur, il ne se forme pas de phase intermétallique ni de couche d'oxyde.

5. Catalyseur suivant l'une des revendications précédentes,
caractérisé en ce que la matière support est résistante à l'attaque chimique par des composés acides ou basiques, par l'acide borique ou par le CO.
